# EUROPÄISCHE PATENTSCHRIFT

(11) **EP 2 456 993 B1**
(45) Veröffentlichungstag und Bekanntmachung des Hinweises auf die Patenterteilung: **01.05.2013**
(21) Anmeldenummer: 10737250.0
(22) Anmeldetag: 24.06.2010
(51) Int. Cl.: F16D 48/06, F16D 48/08

(54) **VERFAHREN ZUR STEUERUNG EINER REIBUNGSKUPPLUNG**
METHOD FOR CONTROLLING A FRICTION CLUTCH
PROCÉDÉ DE COMMANDE D'UN EMBRAYAGE À FRICTION

(30) Priorität: 20.07.2009 DE 102009033922
(43) Veröffentlichungstag der Anmeldung: 30.05.2012
(73) Patentinhaber: Schaeffler Technologies AG & Co. KG, 91074 Herzogenaurach (DE)
(72) Erfinder: REUSCHEL, Michael, 77833 Ottersweier (DE); EBERLE, Christian, 77815 Bühl (DE); HELMBRECHT, Lutz, 77836 Rheinmünster (DE)
(86) Internationale Anmeldenummer: PCT/DE2010/000732
(87) Internationale Veröffentlichungsnummer: WO 2011/009426

(56) Entgegenhaltungen:
- WO-A1-2005/057039
- DE-A1-102006 008 755
- DE-A1-102007 013 113
- DE-A1-102007 053 706

## Beschreibung

Die Erfindung betrifft ein Verfahren mit den Merkmalen gemäß dem Oberbegriff des Anspruchs 1.

Die DE 10 2007 013 113 A1 offenbart ein Verfahren zur Überwachung der thermischen Belastung einer Kupplung, wobei vorgesehen ist, dass die Reibleistung über ein bestimmtes Zeitintervall aufintegriert wird, die aufintegrierte Reibleistung aktuell angepasst wird und bei Erreichen eines bestimmten Reibenergieschwellenwerts, nämlich bei Gefahr einer thermischen Belastung der Kupplung, die Kupplung zumindest teilweise geöffnet wird.

In der WO 2005/057039 A1 wird ein Verfahren zum temperaturabhängigen Regeln einer Lamellenkupplung offenbart. Bei Betrieb unterhalb einer definierten dauern zulässigen ersten Temperatur T₁ wird die Lamellenkupplung abhängig vom Traktionsbedarf geregelt, bei Betrieb zwischen der ersten Temperatur T₁ und einer höheren zweiten Temperatur T₂ wird die Kupplung derart geregelt, dass die eingebrachte Reibleistung herabgesetzt wird, bei Betrieb oberhalb der ersten Temperatur T₁ wird die zweite Temperatur T₂ niedriger gesetzt und bei Überschreiten der zweiten Temperatur T₂ wird die Kupplung derart geregelt, dass die kupplungsspezifische Temperatur abnimmt.

Ein Verfahren zum Erkennen einer Schädigung einer zwischen einer Antriebseinheit und einem Getriebe wirksam angeordneten Reibungskupplung ist aus der DE 10 2005 061 080 A1 bekannt. Hierbei wird die Schädigung aus Einzelschädigungswerten, die auf Basis der in die Reibungskupplung eingetragenen Reibleistungen ermittelt werden, abgeleitet. Übersteigen die ermittelten Einzelschädigungswerte eine Schwelle, wird die Reibungskupplung als geschädigt bewertet.

Derartige Überwachungssysteme werden insbesondere für einen sicheren, ökonomischen und komfortablen Betrieb beispielsweise in Doppelkupplungsgetrieben eingesetzt, in denen die Reibungskupplungen insbesondere bei hoher Last und während Überschneidungsschaltungen stark belastet werden. So sollte zum einen im Betrieb sicher erkannt werden, dass eine oder beide Reibungskupplungen das zu übertragende Moment nicht sicher überträgt und beispielsweise erhöhten Schlupf bei dem entsprechen anliegenden Moment der Antriebseinheit aufweist.

Bei neuen Reibungskupplungen, die noch nicht eingelaufen sind, treten infolge einer noch nicht eingelaufenen Reibpaarung von Reibbelägen der Kupplungsscheibe und den Gegenreibflächen der Reibungskupplung geringere Reibwerte auf. Dies kann unter anderem darauf zurückgeführt werden, dass die nach der Fertigung noch relativ unebenen Reibbeläge mikroskopisch betrachtet noch wenig Kontaktfläche mit den Gegenreibflächen der Druckplatte beziehungsweise der Gegendruckplatte aufweist. Mit zunehmender Einlaufdauer werden die Unebenheiten der Reibbeläge und auch der Gegenreibflächen abgetragen und es entsteht eine größere effektive Reibfläche, welche zu höheren Reibwerten führt, die der Bewertung der Reibungskupplung als funktionsfähig zugrunde gelegt werden.

Noch nicht eingelaufene Reibungskupplungen können daher bei unter den gewöhnlichen Bedingungen angelegtem Moment der Antriebseinheit zu einem Hochdrehen der Drehzahl der Antriebseinheit führen und von einer Bewertungsroutine als verschlissen erkannt werden. Dies kann fälschlicherweise zu einer Beanstandung mit einem verbundenen Tausch der betroffenen Reibungskupplung beziehungsweise im Falle einer Doppelkupplung eines Doppelkupplungsgetriebes zum kompletten Tausch der Doppelkupplung führen.

Es ergibt sich daher die Aufgabe, ein Verfahren zur Steuerung einer gattungsgemäßen Reibungskupplung vorzuschlagen, deren Bewertungssystem zuverlässig arbeitet und bei dem eine Fehldiagnose bei noch in der Einlaufphase befindlicher Reibungskupplung vermieden wird.

Diese Aufgabe wird durch ein Verfahren mit den Merkmalen gemäß Anspruch 1 gelöst.

Die Aufgabe wird also durch ein Verfahren zur Steuerung einer wirksam zwischen einer Antriebseinheit und einem Getriebe angeordneten Reibungskupplung mit einer Erfassung des über die Reibungskupplung übertragenen Moments und einer Ermittlung eines Reibwerts zwischen Reibbelägen einer Kupplungsscheibe und der Gegenreibflächen der Reibungskupplung sowie einer Bewertung der Funktionsfähigkeit anhand des ermittelten Reibwerts gelöst, wobei die Bewertung während einer vorgegebenen Einlaufphase der Reibungskupplung ausgesetzt wird. Das erfindungsgemäße Verfahren kann für einzelne, automatisierte Reibungskupplungen oder für Doppelkupplungen mit zwei Reibungskupplungen für jeweils einen Teilantriebsstrang eines Doppelkupplungsgetriebes vorgesehen werden.

Die Bewertung der einwandfreien Funktionsfähigkeit kann dabei abhängig von der in die Reibungskupplung eingetragenen Gesamtenergie ermittelt werden, wobei eine Bewertung der Reibungskupplung als defekt wie verschlissen solange ausgesetzt und die Einlaufphase aktiviert ist, bis eine Schwelle der Gesamtenergie der in die Reibungskupplung eingetragenen Gesamtenergie erreicht beziehungsweise überschritten wird. Nach dem Erreichen oder Überschreiten dieser Schwelle der Gesamtenergie, die sich an einer typischen Einlaufphase der Reibungskupplung orientieren kann, wird die Bewertung der Reibungskupplung in gewöhnlicher Weise fortgesetzt beziehungsweise gestartet.

Zur Beurteilung, ob die Schwelle der Gesamtenergie erreicht oder überschritten ist, kann die, in die Reibungskupplung eingetragene Reibleistung, über die Zeit aufintegriert werden, so dass die Summe der insgesamt in die Kupplung eingetragene Energie zur Feststellung verwendet wird, ob die Einlaufphase der Reibungskupplung beendet wird. Dabei können entsprechende Erfahrungswerte für die Festlegung der Schwelle der Gesamtenergie gegebenenfalls mit entsprechender Sicherheit herangezogen werden.

Alternativ oder zusätzlich kann während der Einlaufphase die Ermittlung der eingetragenen Gesamtenergie dadurch erweitert werden, dass die Aufintegration der in die Kupplung eingetragenen Reibleistung erst oberhalb einer vorgegebenen Schwelle der Reibleistung erfolgt. Günstigerweise werden die entsprechenden Energie- bzw. Leistungsschwellwerte für jede Kupplung getrennt festgelegt und die eingetragenen Reibenergien kupplungsindividuell ermittelt.

Dabei hat sich gezeigt, dass die Auswirkung der aufintegrierten Reibleistung bzw. eingetragenen Reibenergie stark von der Temperatur der Reibungskupplung abhängen, so dass in vorteilhafter Weise die einzeln ermittelten Energien jeweils mit der aktuell herrschenden Temperatur der Reibungskupplung beziehungsweise einem Schädigungsindex bei extremen Betriebsweisen wie Fahrten mit Anhänger, Lastanfahrten am Berg und dergleichen gewichtet werden.

Gemäß einem vorteilhaften Ausführungsbeispiel kann zur Festlegung einer Einlaufphase in einer Steuerroutine zur Steuerung der Reibungskupplung ein Signal, beispielsweise ein sogenanntes Einlauf-Flag gesetzt werden, bei dessen Aktivität die Bewertung ausgesetzt wird und das bei Erreichen der Schwelle der Gesamtenergie gelöscht wird, so dass ein regulärer Ablauf der Bewertungsroutine zur Ermittlung einer Kupplungsschädigung oder deren Verschleiß gewährleistet ist.

Um eine Schädigung von Bauteilen der Reibungskupplung beispielsweise durch thermische Belastung, eine Komfortminderung durch eine hochdrehende Antriebseinheit, die Bewertung der Reibungskupplung als geschädigt oder verschlissen in weiteren Überwachungsroutinen, beispielsweise der Getriebesteuerungssoftware und/oder andere Effekte einer noch nicht eingelaufenen Reibungskupplung auszuschließen, kann während der Einlaufphase das Moment der Antriebseinheit auf das maximal über die Reibungskupplung übertragbare Moment begrenzt werden.

Nach einem alternativen Verfahren der Bewertung, ob die Einlaufphase beendet ist, kann ein Histogramm der in die Reibungskupplung eingetragenen Reibenergie oder der Leistungsklassen der angefallenen Reibenergien angelegt und mittels einer Auswertung des Histogramms das Einlaufverhalten der Reibungskupplung bewertet werden.

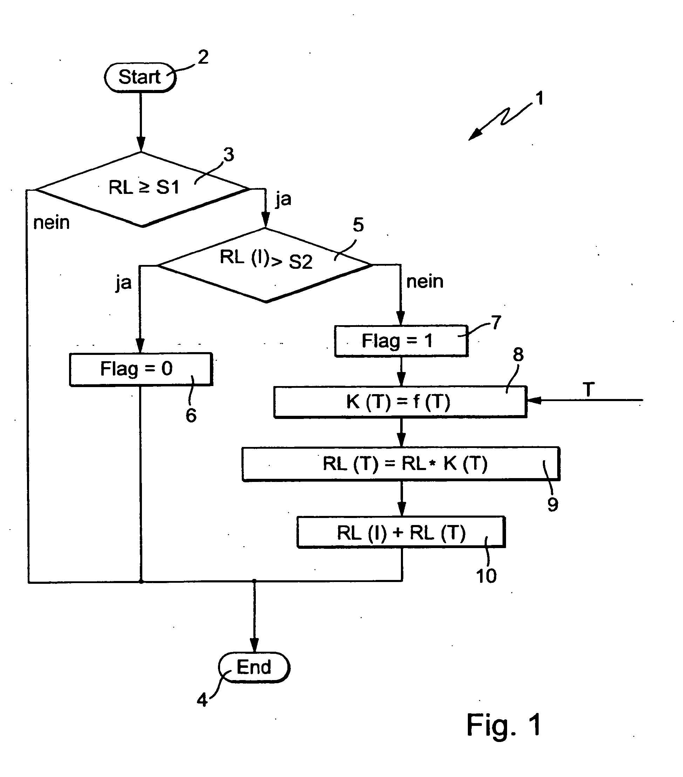

Die Erfindung wird anhand der einzigen Figur näher erläutert. Diese zeigt eine Routine zur Aussetzung des Bewertungsverfahrens der Reibungskupplung während der Einlaufphase.

Die Figur zeigt ein Blockdiagramm der Routine 1 zur Beurteilung des Einlaufverhaltens einer automatisierten Reibungskupplung, beispielsweise einer Doppelkupplung. In Block 2 wird die Routine 1 gestartet. In der Verzweigung 3 wird ermittelt, ob die in die Reibungskupplung eingetragene Reibleistung RL größer als eine Schwelle S1 der Reibleistung ist. Hierdurch soll vermieden werden, dass für das Einlaufverhalten der Reibungskupplung unerhebliche Reibleistungsbeiträge in die Integration der Reibleistung eingehen. Die Routine 1 wird in vorgegebenen, beispielsweise getakteten Zeitabständen durchlaufen, so dass eine Reibleistung RL jeweils für ein vorgegebenes Zeitintervall integriert wird. Ist die Reibleistung kleiner oder gleich der Schwelle S1 wird das Einlaufsignal auf Null gesetzt und die Routine 1 in Block 4 beendet.

Ist die in die Reibungskupplung eingetragene Reibleistung RL größer als die Schwelle S1 wird in der Verzweigung 5 bewertet, ob die integrierte Reibleistung RL(I) welche der bisher erfassten eingetragen Reibenergie entspricht größer als die Schwelle der Gesamtenergie S2 der integrierten Reibleistung RL(I), die als Maß für einen abgeschlossenen Einlaufprozess dient, ist. Überschreitet die gesamte integrierte Reibleistung RL(I) die Schwelle der Gesamtenergie S2, wird das Einlaufsignal Flag gleich Null gesetzt und die Routine 1 in Block 4 beendet. Ist die Einlaufphase infolge einer integrierten Reibleistung RL(I) kleiner oder gleich der Schwelle der Gesamtenergie S2 noch nicht abgeschlossen, wird in Block 7 das Einlaufsignal gleich eins gesetzt, also aktiviert.

Im nachfolgenden Block 8 wird der temperaturabhängige Wichtungsfaktor K(T) aus einer Temperaturfunktion f(T) oder in einer Kennlinie oder einem Kennfeld abgelegten Abhängigkeit des Wichtungsfaktors K(T) von der Temperatur T der Reibungskupplung ermittelt. Die Temperatur T der Reibungskupplung wird dabei in Form eines Kupplungstemperaturmodells ermittelt oder mittels eines Temperatursensors erfasst.

In Block 9 wird die temperaturgewichtete Reibleistung RL(T) aus der beispielsweise aus dem Moment der Antriebseinheit und dem Schlupf der Reibungskupplung ermittelten Reibleistung RL und dem Wichtungsfaktor K(T) durch Multiplikation gebildet.

In Block 10 wird zu der integrierten Reibleistung RL(I) die aktuelle, temperaturgewichtete Reibleistung RL(T) addiert und die Routine 1 in Block 4 beendet. Ein erneuter Start der Routine 1 in Block 1 erfolgt nach Ablauf eines vorgegebenen Zeitintervalls, bis die Routine durch Setzen des Einlaufsignals auf Null endgültig beendet wird.

Er versteht sich von selbst, dass diese Ermittlung für jede Kupplung einzeln durchgeführt werden kann.

### Bezugszeichenliste

- 1: Routine
- 2: Block
- 3: Verzweigung
- 4: Block
- 5: Verzweigung
- 6: Block
- 7: Block
- 8: Block
- 9: Block
- 10: Block
- Flag: Einlaufsignal
- f(T): Temperaturfunktion
- K(T): temperaturabhängiger Wichtungsfaktor
- RL: Reibleistung
- RL(I): integrierte Reibleistung
- RL(T): temperaturgewichtete Reibleistung
- S1: Schwelle Reibleistung
- S2: Schwelle Gesamtenergie der integrierten Reibleistung
- T: Temperatur der Reibungskupplung

## Patentansprüche

1. Verfahren zur Steuerung einer wirksam zwischen einer Antriebseinheit und einem Getriebe angeordneten Reibungskupplung mit einer Erfassung des über die Reibungskupplung übertragenen Moments und einer Ermittlung eines Reibwerts zwischen Reibbelägen einer Kupplungsscheibe und der Gegenreibflächen der Reibungskupplung sowie einer Bewertung der Funktionsfähigkeit anhand des ermittelten Reibwerts, wobei die Bewertung während einer vorgegebenen Einlaufphase der Reibungskupplung ausgesetzt wird, wobei die Einlaufphase bis zum Erreichen einer Schwelle der Gesamtenergie der in die Reibungskupplung eingetragenen Energie aktiviert ist, **dadurch gekennzeichnet**, während der Einlaufphase ein Signal gesetzt wird, bei dessen Aktivität die Bewertung ausgesetzt wird.

2. Verfahren nach Anspruch 1, **dadurch gekennzeichnet, dass** die eingetragene Gesamtenergie durch Integrierung der zugehörigen Reibleistung gebildet wird.

3. Verfahren nach einem der Ansprüche 1 und 2, **dadurch gekennzeichnet, dass** die Integrierung der eingetragenen Reibleistung erst oberhalb einer vorgegebenen Schwelle der Reibleistung erfolgt.

4. Verfahren nach einem der Ansprüche 1 bis 3, **dadurch gekennzeichnet, dass** die Berechnung der Gesamtenergie in Abhängigkeit von der bei der ermittelten Reibleistung herrschenden Temperatur der Reibungskupplung gewichtet wird.

5. Verfahren nach einem der Ansprüche 1 bis 4, **dadurch gekennzeichnet, dass** während der Einlaufphase das Moment der Antriebseinheit auf das maximal über die Reibungskupplung übertragbare Moment begrenzt wird.

6. Verfahren nach Anspruch 1, **dadurch gekennzeichnet, dass** ein Histogramm der in die Reibungskupplung eingetragenen Reibenergie oder der Leistungsklassen der angefallenen Reibenergien angelegt und mittels einer Auswertung des Histogramms das Einlaufverhalten der Reibungskupplung bewertet wird.

## Claims

1. Method for controlling a friction clutch effectively arranged between a drive unit and a gearbox, with sensing of the torque transmitted via the friction clutch and determination of a coefficient of friction between friction linings of a clutch disc and the opposing friction faces of the friction clutch, and evaluation of the functional capability on the basis of the determined coefficient of friction, wherein the evaluation is suspended during a predefined run-in phase of the friction clutch, and wherein the run-in phase is activated up to the point when a threshold of the total amount of energy input into the friction clutch is reached, **characterized in that** during the run-in phase a signal is set at the activation of which the evaluation is suspended.

2. Method according to Claim 1, **characterized in that** the total amount of input energy is formed by integration of the associated frictional power.

3. Method according to one of Claims 1 and 2, **characterized in that** the integration of the input frictional power is only carried out above a predefined threshold of the frictional power.

4. Method according to one of Claims 1 to 3, **characterized in that** the calculation of the total amount of energy is weighted as a function of the temperature of the friction clutch which occurs at the determined frictional power.

5. Method according to one of Claims 1 to 4, **characterized in that** during the run-in phase the torque of the drive unit is limited to the maximum torque which can be transmitted via the friction clutch.

6. Method according to Claim 1, **characterized in that** a histogram of the amount of frictional energy input into the friction clutch or of the power classes of the amounts of frictional energy which occur is produced, and the run-in behaviour of the friction clutch is evaluated by assessing the histogram.

## Revendications

1. Procédé de commande d'un embrayage à friction disposé fonctionnellement entre une unité d'entraînement et une transmission, comprenant une détection du couple transmis par l'embrayage à friction et une détermination d'un coefficient de friction entre les garnitures de friction d'un disque d'embrayage et les surfaces de friction conjuguées de l'embrayage à friction, ainsi qu'une analyse de la fonctionnalité à l'aide du coefficient de friction déterminé, l'analyse étant supprimée pendant une phase de rodage prédéfinie de l'embrayage à friction, la phase de rodage étant activée jusqu'à l'obtention d'un seuil d'énergie totale de l'énergie introduite dans l'embrayage à friction, **caractérisé en ce que** pendant la phase de rodage, un signal est émis, durant l'activation duquel l'analyse est supprimée.

2. Procédé selon la revendication 1, **caractérisé en ce que** l'énergie totale introduite est formée par intégration de la puissance de friction associée.

3. Procédé selon l'une quelconque des revendications 1 et 2, **caractérisé en ce que** l'intégration de la puissance de friction introduite a lieu seulement au-dessus d'un seuil prédéfini de puissance de friction.

4. Procédé selon l'une quelconque des revendications 1 à 3, **caractérisé en ce que** le calcul de l'énergie totale est pondéré en fonction de la température de l'embrayage à friction régnant lorsque la puissance de friction est déterminée.

5. Procédé selon l'une quelconque des revendications 1 à 4, **caractérisé en ce que** pendant la phase de rodage, le couple de l'unité d'entraînement est limité au couple maximum pouvant être transmis par le biais de l'embrayage à friction.

6. Procédé selon la revendication 1, **caractérisé en ce qu'**un histogramme de l'énergie de friction introduite dans l'embrayage à friction ou des classes de puissance des énergies de friction produites est appliqué et le comportement de rodage de l'embrayage à friction est analysé au moyen d'une analyse de l'histogramme.
